# EUROPEAN PATENT APPLICATION

(11) **EP 1 344 720 A2**
(43) Date of publication of application: **17.09.2003**
(21) Application number: 03251193.3
(22) Date of filing: 27.02.2003
(51) Int. Cl.: B65D 1/02

(54) **Plastic container**

(30) Priority: 27.02.2002 US 83975
(71) Applicant: TROPICANA PRODUCTS, INC., Bradenton, FL 34208 (US)
(72) Inventor: Nelson, Brent S., Bradenton, Florida 34202 (US)
(74) Representative: Schlich, George William

(57) **Abstract**

A plastic container (10), especially suitable for long-term storage of beverages that are hot filled into their containers, having in one embodiment a plurality of relatively flat vacuum panels (30), having in another embodiment a multilayer polymeric material with a nylon interior layer (114), and having in a further embodiment a combination of the other embodiments.

## Description

The present invention is directed to plastic containers. More specifically, the present invention relates to blow moulded shaped plastic containers, particularly beverage containers.

Hot filled containers are designed for packaging of liquids which must be placed in the container while hot to provide for adequate sterilization. During filling, the container is subjected to elevated temperatures of approximately 82°C to 85°C (180°F to 185° F) - i.e. the product temperature - and positive internal pressures of approximately 13 kPa to 35 kPa (2 to 5 psi), the so-called filling line pressure. The container is then capped, and as the product cools, a negative internal pressure is formed in the sealed container. The hot fill, however, can cause distortion and shrinkage of the container. It is desirable that the volumetric shrinkage be limited to no greater than 1%.

Many different types of containers have been created to receive a hot-fill product and meet the objectives of a minimum amount of thermal shrinkage and distortion. However, previous efforts to produce bottles for handling hot filling and to meet the above objections have necessarily included panels having indents, detents, protruding surfaces and/or recessed surfaces functioning as so-called vacuum panels to allow for container stress relief.

For example, U.S. Patent No. 4,863,046 (Collette et al.) discloses a blow moulded container for receiving a hot fill product. The container in the '046 patent, however, does not have flat side panels but instead has a series of indents or recessed portions and ribs in the side panels in order to minimize shrinkage and increase longitudinal stiffness of the panel section.

Another patent disclosing a plastic container with vacuum panels is U.S. Patent No. 5,704,503 (Krishnakumar). The container in the '503 patent also does not have flat vacuum panels, but instead requires longitude post ribs flanked by walls, in between recessed vacuum panels. Hoop ribs are also provided around the panel.

U.S. Patent No. 4,877,141 (Hayashi et al.) shows another type of vacuum panel. The '141 patent does not have flat panels, but rather panels that have stress absorbing strips to prevent deformation of the container. Each of the '141 panels is also surrounded by outer sheaths.

Accordingly, these prior containers teach the need to have specially designed structures to accommodate volume changes upon cooling of hot filled products. These containers did not have flat vacuum panels.

It is an object of the present invention to provide a flat vacuum panel structure, without the need for any such ribs or stress absorbing strips. This provides smooth sides for ease of label application and cleanness of appearance, while still maintaining a sufficient top load rating. The smooth sides also provide an appealing feel for the consumer, especially in the label area which does not suffer from the wrinkled feel of labels on prior containers.

Another consideration regarding choice of plastic containers relates to the plastic polymer used to mould the container. Frequently, a multilayer polymer composition is used to provide strength and other benefits to the container.

For example, U.S. Patent No. 4,182,457 (Yamada) discloses a multilayer container and several embodiments thereof (see columns 9 and 28 therein). These structures, however, have a polyolefin as the innermost layer. Polyolefins have been found to rapidly strip the limonene out of fruit or citrus juices. This adversely affects the taste of the juice as limonene and other important flavour and colour components contribute to desirable tangy flavours and colour of the juices.

U.S. Patent No. 4,990,382 (Weissenstein et al.) discloses laminated blow moulded containers which are purported to provide a glass like appearance. The '382 patent also discloses some containers with seven layer structures. In these containers, the interior layer is a polypropylene followed by a layer of adhesive, a barrier layer, another layer of adhesive, a relatively thick layer formed of regrind scrap containers, a third layer of adhesive and an outside gloss coat layer formed from plastic materials including ethylenelvinyl alcohol copolymer (EVOH) and nylon and mixtures thereof. Since this container has polypropylene, a polyolefin, as the inner most layer, the '382 container will also quickly strip the limonene and other important flavour and colour components out of fruit juice therein and adversely affect the taste and colour of the juice.

Reissue Patent No. Re 34,546 (Deyrup) is directed to the use of high density linear polyethylene for containers and also generally discloses the use of seven layer structures for containers. Deyrup '546 recites for example a seven layer structure including polyethylene, adhesive, EVOH, adhesive, polyethylene, adhesive and polyamides or nylons. While an amorphous polycarboxlamide is used as an inner layer in some of the structures, neither a layer of polypropylene nor a layer of regrind is used in the multilayer structure.

Therefore, an object of the present invention is to provide a plastic container having a multilayer, preferably seven layer, structure which is suitable for storage of beverages of juices, dairy products and combinations thereof and which will not adversely affect the taste and colour of the beverages therein.

Still another object of the present invention is to provide a plastic container having a flat vacuum panel structure and a multilayer structure, which is suitable for storage of beverages of juices, dairy products and combinations thereof.

The present invention is directed to plastic containers including those formed by blow moulding, which are especially suitable for long-term storage of beverages that are hot filled into the containers. The invention provides a plastic container, especially suitable for long-term storage of beverages that are hot filled into their containers, having in one aspect a plurality of relatively flat vacuum panels. More specifically, this first aspect of the present invention is directed to a panel design for hot fillable plastic containers having a plurality of flat vacuum side panels.

A second aspect of the present invention is directed to multilayer plastic containers, preferably plastic containers having a seven layer polymer structure. In a preferred embodiment the invention provides a multilayer polymeric material with a nylon interior layer.

The invention also provides, therefore, a plastic container comprising both of the previously mentioned aspects in combination and thereby enjoying the benefits associated with both of these aspects of the invention.

In a first embodiment of the present invention, the container comprises a body portion, said body comprising a plurality of panel sections each of which exhibits flexibility to move between a bowed (convex) and a planar configuration. In a specific embodiment the body portion has a rectangular cross-section with four panels, wherein each of the four panels is relatively flat, but flexible. These panels function as vacuum panels which buckle slightly inwardly in response to cooling of the hot filled liquid. The panels move from a planar configuration and a bowed configuration in response to filling with hot product and cooling after filling. By having virtually flat panels, label application to the container is greatly simplified while providing a smooth, aesthetically pleasing look and feel.

In a second embodiment of the present invention, the container has walls that consist of a polymeric material having a multilayer structure comprising layers of polypropylene, adhesive, EVOH, adhesive, regrind, adhesive, and polyamide (e.g. amorphous nylon). A seven layer structure is suitable for use in the manufacture of containers of the invention. Preferably, the polypropylene forms the outside of the container wall while the amorphous nylon forms the innermost layer which contacts the contents of the container. It is a significant advantage of the invention that the amorphous nylon layer prevents the beverages from losing their colour and taste, due to either scalping of key flavour and colour components out of the juice and into the plastic and/or imparting from the plastic off note plastic flavours into the juice. The other layers provide strength and a barrier layer for contaminants.

In a third embodiment of the present invention, the container has the flat panel walls of the first embodiment and is formed as a polymeric material having the multilayer structure of the second embodiment. In a specific example of this embodiment in use the container wall has a seven layer structure.

### The invention is illustrated in the accompanying drawings in which:

FIG. 1 is a perspective view of a beverage container of a first embodiment of the present invention;
FIG. 2 is an elevational view of the container of FIG. 1;
FIG. 3 is a top plan view of the container of FIG. 1;
FIG. 4 is a bottom plan view of the container of FIG. 1;
FIG. 5 is a perspective view of another example of a container of the first embodiment of the present invention;
FIG. 6 is an elevational view of the container of FIG. 5; and
FIG. 7 is a cross-sectional view of the seven layers of the polymeric material of a container according to the second embodiment of the present invention.

The containers described in the present invention are of particular advantage in overcoming the problems associated with the containers of the prior art. Specific embodiments of the invention are described in detail below.

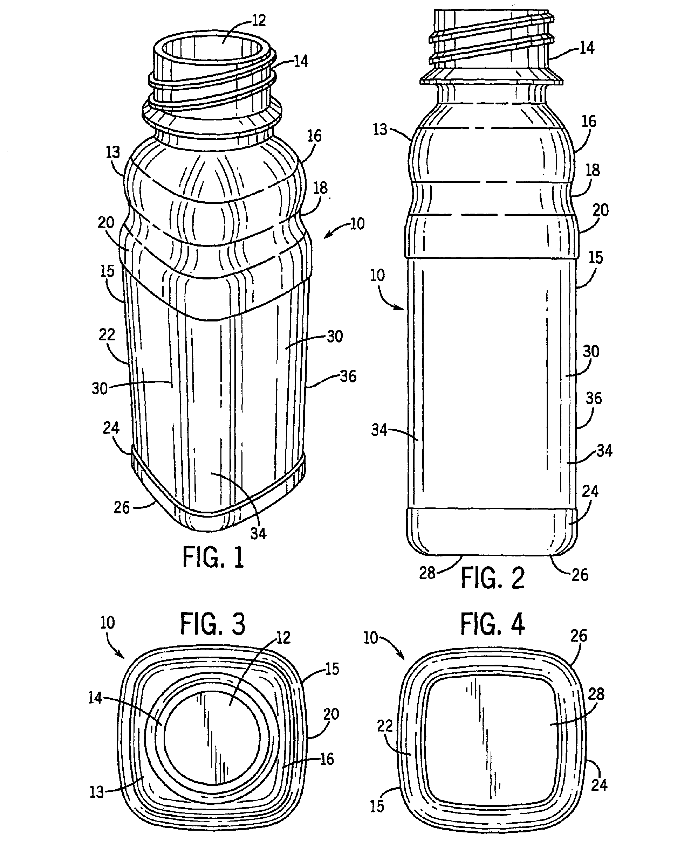

FIGS. 1-4 show a first embodiment of the present invention. This embodiment is directed to a plastic container 10, preferably a beverage bottle, for hot fill liquids. The bottle includes an open mouth 12 to receive hot fillable liquids, a bell (or upper) area or portion 13, and a body (or lower) area or portion 15.

Concerning the bell area 13, surrounding the mouth 12 is a neck 14 to receive a cap [not shown]. Preferably, the neck 14 has threads for screwing on the cap. Below the neck is a shoulder section 16 which increases generally in width from the neck to a maximum point, lower on the container. The width then decreases to a recessed area 18. Then, below the recessed area 18 is a first elevated ridge 20. This bell area helps to provide an acceptable top load rating for the container. The top load rating relates to the ability of the container to have other items, particularly other containers, stacked thereon. In the present embodiment, a top load rating of at least 36 kg (around 80 pounds) has been achieved. The bell area 13 is able to provide sufficient strength so that it is not necessary for the body portion 15 to provide a means for supporting a top load weight, which means typically include indents, detents, protruding surfaces and/or recessed surfaces.

The body portion 15 is generally defined as follows. The body portion 15 includes below the first elevated ridge 20 a rectangular (longitudinally) lower body portion or panel section 22. Below the panel section 22 is a second elevated ridge 24 and a base 26. As shown, the elevated ridges 20 and 24 have a greater width (in transverse bottle cross section) than the panel section 22. Ridges 20 and 24 act to isolate the panel section and allow the panel section to act as vacuum panels. These ridges also act as bumpers for the bottles to keep the bottles flush to one another on a conveyor belt during filling and/or capping and to keep them moving along the conveyor belt. The ridges could also operate as protection for a label located only on the side panels. Base 26 preferably includes a recessed closed bottom 28 as shown in FIG. 4 which moves inwardly to cooperate with the panel section 22 in order to reduce the negative pressure during product cooling.

Preferably, the panel section 22 has a transverse cross-sectional shape which can be square, but is not limited to this shape. More preferably, the panel section has four flat side panels which are rectangular. Typically, the side panels are substantially identical in size, shape, thickness and composition. In a further embodiment, the mould line (not shown) for the container is located on a first and a second opposing side panels, as opposed to in the corners. In this embodiment, the first and second opposing side panels can optionally be slightly thicker than the other side panels.

Each side panel 30 is not only flat but flexible and has no ribs, stress absorbing strips, recessed areas, or other similar obstructions to panel bowing. Each of the side panels preferably has smooth corners 34 between the two panels. This advantageously allows a label to be smoothly and easily applied to the bottle. For example, in a particular embodiment of the invention a label 36 extends from the top shoulder 16 to base 26. The present invention, however, is not limited to the size or length of the label.

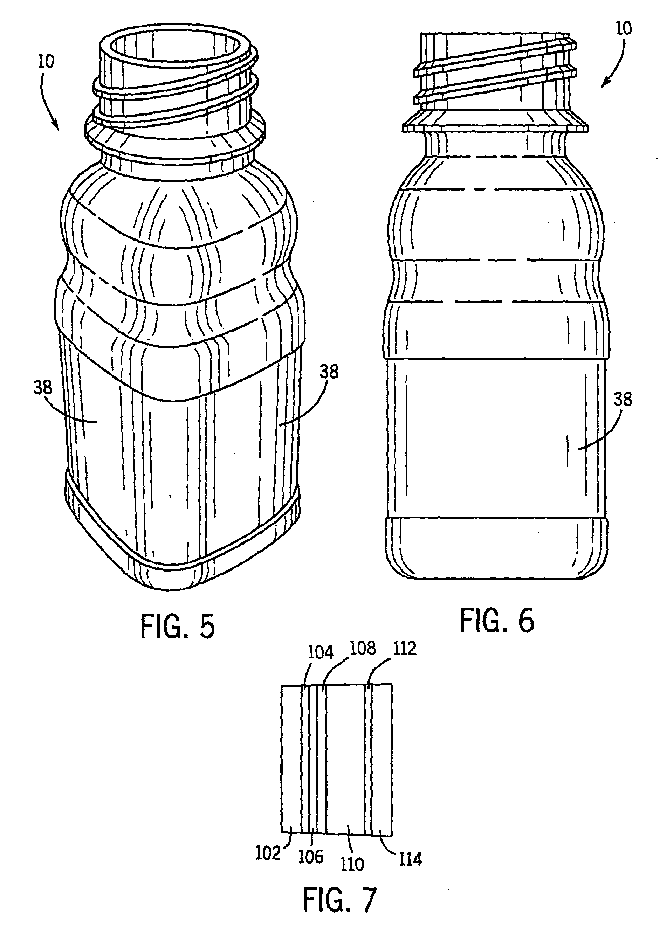

While FIGS. 1-4 show the side panels having a long longitudinal length, the panels can be of any length as for example shown in FIGS. 5-6. In these figures, side panel 38 has a much shorter height. Otherwise, the plastic container of FIGS. 5-6 is essentially the same as the container shown in FIGS. 1-4.

The second embodiment of the present invention is directed to a plastic container formed of a polymeric material and having a seven layer structure. FIG. 7 is a cross-sectional view of the seven layers in the plastic polymeric material of the walls of the container. In a specific embodiment, the plastic polymeric material has four structural layers and three adhesive layers.

As shown in FIG. 7, the exterior surface 102 of the container of this embodiment is suitably made of polypropylene, such as a virgin polypropylene. The mid-outer layer 104 is an adhesive. The mid-interior layer 106 is ethylene-vinyl alcohol polymer (EVOH). The next layer 108 is another layer of adhesive. The next layer 110 is a re-grind layer and is an interior, sandwiched layer. This layer can be suitably derived from a "scrap" of the seven layer coextrusion which has been collected and ground into polymer. Preferably the bulk of the coextrusion is the re-grind material, making up to approximately 70 percent of the total thickness of the extrusion. The next layer is another adhesive layer 112. These layers act as a barrier to keep contaminants away from the beverage and to give strength to the container. As a result, the beverage within the container will benefit from a longer shelf life than other containers without such a combination of layers.

The contact or innermost layer 114 is typically a polyamide, such as an amorphous nylon. It is the amorphous nylon layer which contacts the contents of the container, such as a beverage within the container. The nylon layer does not strip the limonene and other important flavour and colour components out of the beverage. As a result, a fruit or citrus containing beverage stored within the container of the present invention will maintain its tangy flavour and colour longer and will not have a plastic taste.

The following is an example of a plastic container having a seven layer construction in accordance with this embodiment of the present invention. Preferably, for a 355 ml (12-ounce) container such as shown in FIG. 1, the weight of the empty/bare bottle is 27 grams. Materials suitable for manufacturing the container of the present invention include polypropylene (Marlex®) manufactured by Phillips, manufacturer No. RGN-020; EVOH (Soarnol®) from Soarus, manufacturer No. DCF3203F; and polyamide/nylon from Dupont (Selar®), manufacturer No. PA3426. An adhesive from Dupont (Bynel®), manufacturer No. CXA 50E571, is suitably used for each of the adhesive layers.

In an example of the invention in use the abovementioned materials were utilised in a polymeric composition shown in Table 1 to produce a plastic beverage container in accordance with the present invention.

**TABLE 1**

| Layer | Material | Target Thickness in mm (inches) | % of thickness |
|---|---|---|---|
| | | | |
| Outer | Virgin Polypropylene | 0.150 (0.006) | 20 |
| Mid-outer | Adhesive | 0.010 (0.0004) | 1.3 |
| Mid-inner | EVOH | 0.015 (0.0006) (minimum) | 2 |
| Mid-inner 1 | Adhesive | 0.010 (0.0004) | 1.3 |
| Inner | Regrind | 0.550 (0.0216) | 72 |
| Lower-inner | Adhesive | 0.010 (0.0004) | 1.3 |
| Contact | Amorphous Nylon | 0.015 (0.0006) (minimum) | 2 |

When being used to manufacture a container, typically the polymeric material of this embodiment initially is in the form of a parison which is extruded into a preform and blow moulded into the desired shape. This can be done in a conventional manner well known to those skilled in the art. The present invention is not limited to a particular method of extrusion or blow moulding.

In a third embodiment of the present invention, a beverage container of the first embodiment, such as that shown in FIGS. 1-6 and described above, is formed of a polymeric material having a seven layer structure of the second embodiment, such as that shown in FIG. 7 and described above. This combination is especially suitable for hot filled beverages, particularly those which are susceptible to development of off plastic flavours when stored for long time periods such as for about six months or more in polymeric containers. The combination is also useful for containers for beverages containing 10 weight percent or more of fruit or citrus juice. Further, the combination is particularly useful for beverages containing fruit or citrus juice and dairy products, such as for example a 'smoothie' beverage comprising both yoghurt and fruit juice. In a preferred embodiment, the smoothie beverage comprises yoghurt, approximately 50 weight percent of fruit juice and other additives.

It will be understood that the embodiments of the present invention which have been described are illustrative of some of the applications of the principles of the present invention.

## Claims

1. A hot filled plastic container comprising
a bell portion, a body portion and a base;
wherein said bell portion includes a neck for passage of a hot filled food product therethrough and a shoulder portion between said neck and said body portion, and wherein said body portion comprises a plurality of panel sections, wherein each of said panel sections is flat and flexible, each said panel section exhibiting flexibility to move between a bowed and a planar configuration in response to temperature changes experienced by the container;
wherein said container is formed of a polymeric material, said polymeric material comprising a layer of polypropylene, a layer of ethylene-vinyl alcohol polymer adhered to said layer of polypropylene, a layer of regrind adhered to said layer of ethylene-vinyl alcohol polymer, and a layer of amorphous nylon adhered to said layer of regrind; and
wherein said layer of polypropylene forms an exterior surface of the container and said layer of amorphous nylon forms an interior surface of the container which is in contact with the hot filled food product.

2. A plastic container according to Claim 1, wherein said body portion is generally rectangular in transverse cross section and includes four panel sections.

3. A plastic container according to Claims 1 and 2, wherein said panel sections have no ribs, no stress absorbing strips, no raised areas and no recessed areas.

4. A plastic container according to any of Claims 1-3, further comprising a label, which label engages said panel sections.

5. A plastic container according to Claim 4, wherein said label extends from the bottom of said neck to said base, including said panel sections.

6. A plastic container according to any previous Claim, wherein said container is a beverage container which contains a hot filled beverage that comprises at least 10 weight percent of a citrus or fruit juice.

7. A plastic container according to Claim 6, wherein said hot fill beverage includes approximately 50 weight percent of a citrus or fruit juice.

8. A plastic container according to Claims 6-7, wherein said hot fill beverage further comprises a dairy product.

9. A plastic container according to Claim 8, wherein said dairy product is yoghurt.

10. A hot filled plastic container comprising:
a bell portion, a body portion and a base;
wherein said bell portion includes a neck for passage of a hot filled food product therethrough and a shoulder portion between said neck and said body portion; and
wherein said body portion comprises a plurality of panel sections,
wherein each of said panel sections is flat and flexible, each said panel section exhibiting flexibility to move between a bowed and a planar configuration in response to temperature changes experienced by the container.

11. A plastic container according to Claim 10, wherein said body portion is generally rectangular in transverse cross section and includes four panel sections.

12. A plastic container according to Claims 10 and 11, wherein each panel section is coupled to the adjoining panel section by a smooth, rounded corner.

13. A plastic container according to any of Claims 10-12, wherein said panel sections have no ribs, no stress absorbing strips, no raised areas and no recessed areas.

14. A plastic container according to any of Claims 10-13, further comprising a label, which label engages said panel sections.

15. A plastic container according to Claim 14, wherein said label extends from the bottom of said neck to said base, including said panel sections.

16. A multilayer plastic container comprising at least one wall which defines an interior surface and an exterior surface of the container, wherein said wall comprises seven layers with a first layer of polypropylene, a second layer of adhesive, a third layer of ethylene-vinyl alcohol polymer, a fourth layer of adhesive, a fifth layer of polymer regrind, a sixth layer of adhesive, and a seventh layer of polyamide and wherein said first layer of polypropylene forms the exterior surface of the container and said seventh layer of polyamide forms the interior surface of the container.

17. A plastic container according Claim 16, wherein said fifth layer of regrind forms at least 70% of the thickness of said wall.

18. A plastic container according to either of Claims 16 or 17, wherein said first layer of polypropylene forms approximately 20% of the thickness of said wall.

19. A plastic container according to any of Claims 16-18, wherein said third and seventh layers each form approximately 2% of the thickness of said wall.

20. A multilayer plastic container formed of a polymeric material, wherein said polymeric material comprises a layer of polypropylene, a layer of ethylene-vinyl alcohol polymer adhered to said layer of polypropylene, a layer of regrind adhered to said layer of ethylene-vinyl alcohol polymer, and a layer of amorphous nylon adhered to said layer of regrind, wherein said layer of amorphous nylon forms the interior surface of the container.

21. A plastic container according to Claim 20, wherein said layer of regrind forms at least 70% of said polymeric material.

22. A plastic container according to either of Claims 20 or 21, wherein said layer of polypropylene forms approximately 20% of said polymeric material.

23. A plastic container according to any of Claims 20-22, wherein said layer of ethylene-vinyl alcohol polymer and said layer of amorphous nylon each form approximately 2% of said polymeric material.

24. A plastic container according to any previous Claim, wherein said container is a hot fill plastic container.

25. A plastic container according to any previous Claim, wherein said container is a blow moulded container.

26. A plastic container according to Claim 25, wherein said container is a blow-moulded polypropylene container.

27. A plastic container according to any previous Claim, wherein said container has a top load rating of at least 36 kg (80 pounds) at room temperature or below.

28. A plastic container according to any previous Claim, wherein two opposing side panels have a mould line located therein.
